# EUROPEAN PATENT APPLICATION

(11) **EP 1 902 909 A1**
(43) Date of publication of application: **26.03.2008**
(21) Application number: 06076738.1
(22) Date of filing: 19.09.2006
(51) Int. Cl.: B60R 21/13

(54) **Rollover protection system for vehicles comprising a deployable arch combined with a headrest**

(71) Applicant: NORSK HYDRO ASA, 0240 Oslo (NO)
(72) Inventor: Lodgaard, Christian Eide, 0487 Oslo (NO); Pejakovic, Nikola, 85764 Oberschleissheim (DE); Krenzer, Harald, 85551 Kirchheim (DE); Pedersen, Roald Helland, 2818 Gjovik (NO); Allmeier, Stefan, 85716 Unterschleissheim (DE)
(74) Representative: Bleukx, Lucas Lodewijk M.

(57) **Abstract**

Roll over protection system for a vehicle, comprising a structural frame (1) with at least one roll over protection unit. The structural frame is arranged in the interior of the vehicle and further extends in the transversal direction of the vehicle. The frame comprises two substantial vertical extending members (2,3) having at least one interface with the vehicle's structure, and further being interconnected with a transversal arranged beam (4). The frame contributes to global vehicle stiffness.
The frame being provided with at least one deployable bar (7) stored in the vertical extending members.

## Description

The present invention relates to a roll over protection system for a vehicle. In particular, the invention comprises a structural frame providing stiffness to the vehicle structure, with integrated active roll over protection systems, hereafter it will be named ROPS. The term active roll over protection refers to the type of roll over protection structures that are more or less hidden, but are extended prior to a roll over crash situation. In particular, the invention relates to a ROPS comprising a portal frame, which contributes to torsional and bending stiffness of the body in white (BIW; car body ready for final assembly) of convertible vehicles. Alternatively, the frame may feature two additional forward extensions connecting the frame to the B pillars (rear door posts of front doors) of the vehicle. One or two autonomous ROP (Roll Over Protection) units are embedded within the structure, thus enabling the portal frame members, particularly its side pillars, to assume larger cross sections than hereto. Conversely, by utilizing efficiently the space within the members of portal frame, in particular that of the side pillars, the design allows the employment of ROP units with large, effective cross sections that can carry high crash loads.

Conventionally systems have two autonomous ROP units attached to a rear wall behind the passenger compartment that is integral with the BIW.

DE 19905578 discloses a structural cross member replacing said rear wall, where two autonomous ROP units are attached to a cross member, so that they extend above and below the cross member.

DE 102005004648 discloses a structural cross member, where two autonomous ROP units are attached through a cross member, so that they extend above and below the cross member.

A concept combining laterally spaced autonomous frame cassettes with one large deployable roll over bar embedded the cassettes is known from DE 19712955.

Modules combining cross members where autonomous ROP units are attached to or inserted trough the cross member may provide similar crash performance and stiffness while keeping within smaller dimensions than that of said conventional systems attached to a dividing wall in the vehicle. However, the module's interfaces to the body in white (BIW) are relatively small, a feature that requires very high local stiffness to enable the module to contribute significantly to global vehicle stiffness. Furthermore, the ROP units may extend above, and particularly below the cross member, obstructing space e.g. for luggage compartment.

Due to limitations in space available in the vehicle, the ROP units in these systems are located directly behind the rear passenger seats. The large majority of roll over accidents however involve impacts towards the upper corners of the car, due to the continuous rotational momentum of the car during the roll over accident. Considering this, arranging the ROP units further toward the sides of the vehicle will further improve roll over protection.

Concepts combining lateral cassettes with one large deployable roll over bar are compact in all directions, enabling large cross sections, but will not contribute significantly to the overall stiffness of the vehicle. Furthermore, due to their flexible structural arrangement, being caused by the cassettes not being interconnected, geometrical deviations caused by production tolerances or first crash deformations, such as in a side impact, may hinder deployment of the bar.
This problem is accentuated by the design of the rigid bar stretching from one side of the vehicle to the other.

The present invention may feature two very compact autonomous ROP's, thereby creating a setup very robust with regards to said geometric deviations in the frame, A system comprising two ROP's units may in some accidents be more robust than a large single roll over bar, considering the fact that first deformations hindering one bar from deploying does not prevent the other bar from functioning as intended.

Furthermore the invention utilizes the transverse connection between the side pillars in the frame to stabilize geometrically these pillars towards each other towards said geometric deviations.

In accordance with the present invention, said autonomous systems are embedded within the vertical members (pillars) of the portal frame, a feature that renders the module as compact as possible, while virtually all of the stiffness contributing material are at the perimeter of the frame members, where the material most effectively adds to the moments of inertia, thus stiffness, of said members.

The side pillars may be of an open channel type (not shown) which are closed by the BIW when being assembled to the car, thus being reinforced in the assembly to provide more bending- and particularly torsional stiffness.
Conversely the side pillars may be configured to have closed cross sections, with inherent high bending- and torsional properties.

Furthermore said chamber may be divided into two or more compartments through side wall(s), particularly with the added chambers fore and aft the main chamber housing the ROP(s), thus enabling the important sideways cross sectional width of said ROP's to practically match the sideways width of the side pillar.

The cross beam (transverse beam) of the frame is very beneficially of a closed chamber configuration, providing both high bending- and torsional stiffness. This may also be divided into several chambers. Furthermore, in the case that the frame houses one ROP, the transverse part of this ROP may be imbedded in a channel-like aperture in said transverse beam in its stored position.

The connection between the side pillars and the transverse beam is effectively executed by joining the outer walls of these beams to each other, creating a continuous structure without loss of strength and stiffness in the joining area.
The means of connection may be welding, or by bolting, riveting and or bonding overlap joints.

Furthermore, the portal frame, alternatively with extensions to the B-pillar of the vehicle, enables more interfaces to the vehicle structure that are wider apart from one another. As said, it has been experienced that particularly the upper corners of the vehicle are the first parts of the structure to hit the ground in a roll over accident. The present invention enables more effective contributions to global vehicle stiffness with lower requirements on local stiffness in the interfaces than that of known modules, at the same time as allowing space for effectively dimensioned integral ROP units.

The roll over bars in the present invention may also be extended in the length direction of the vehicle in their top area, thus maintaining the same projected area towards the ground as conventional roll over bars, when impacting the ground, even when it is enclosed within a relatively slim side pillar. Furthermore, as discussed, the crash surface is available in the area where a large majority of the impacts that result from a roll over situation, hit the roll over bar. Thereby energy absorption is larger and penetration reduced in impacts onto soft soil/gravel or similar. Furthermore, the ROP's units spread out the attachment points to the car body, thus connecting more efficiently to the car body. This has the benefit, as indicated above, to enable the frame to contribute to the stiffness of the car body more efficiently, together with distributing the roll over crash forces more evenly into said car body. These factors furthermore enable a lighter and more cost-efficient car body to be used, together with utilizing the ROPS in a more expedient manner.

The purpose of the invention is to provide a frame with maximum contribution to global vehicle stiffness, while occupying minimum space, and featuring integrated ROP units with crash performance equal or better than that of prior art solutions.

The particular features of the system are;
- The combination of portal frame with one or two integrated autonomous ROP units, the extremities of these units being located further toward the side extremities of the vehicle than that of conventional ROPS
- The portal frame having vertical members or pillars that extend to the top of the portal, the cross member being arranged between said vertical members
- The roll over bar featuring an extension in X direction (length direction of the vehicle) in the top area, increasing the projected crash area of the bar in regions where a majority of roll over impacts towards the system occur

The invention combines maximum contribution to vehicle stiffness, while it has a state of the art roll over protection level, and further occupying a minimum of space in the vehicle.

These and further advantages can be achieved with the invention in accordance with the accompanying claims.

In the following, the invention shall be further described by examples and figures where:
Fig. 1 discloses a ROPS comprising a portal frame seen in perspective, showing mainly its front side,
Fig. 2 discloses the portal frame as shown in Fig. 1 in another perspective, showing mainly its rear side,
Fig. 3 discloses a second embodiment of the invention, seen in perspective mainly from one side,
Fig. 4 discloses one roll over bar in the ROPS,
Fig. 5 discloses springs and guides for one roll over bar in the ROPS,
Fig. 6 discloses a holding/release unit for one roll over bar in the ROPS,
Fig. 7 discloses a sub-assembly of the parts disclosed in Figs. 5 and 6,
Fig. 8 discloses one roll over bar with a rack attached thereto,
Fig. 9 discloses one ratchet mechanism in the ROPS.

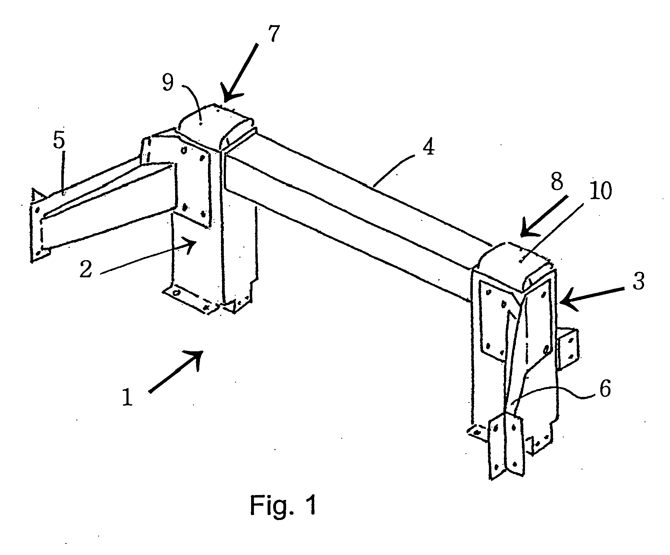

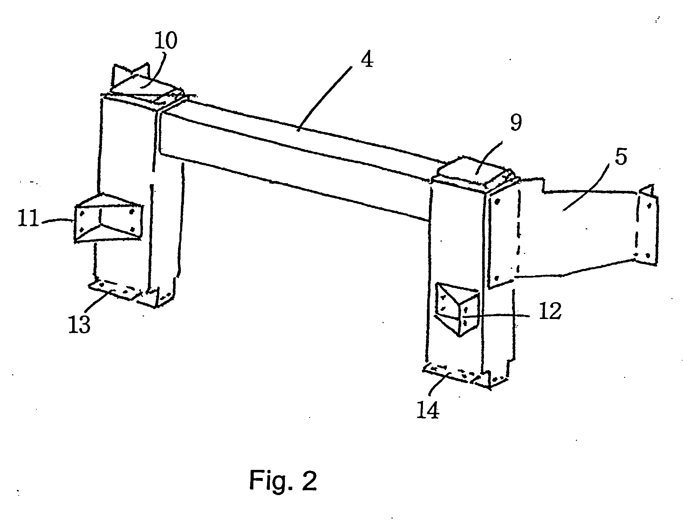

Figs. 1 and 2 disclose a portal frame 1 having vertical members or pillars 2, 3 that extend to the top of the portal, and where a cross member 4 is arranged between said vertical members. Further, the vertical members 2, 3 have extensions 5, 6 from the top corners of the portal forward to B-pillars or the similar of the vehicle.

The vertical members 2, 3 can be bolted to the floor of the body in white in the bottom end, to the wheelhouse on the sides, and to the forward extensions in the top. However, it should be understood that any appropriate fastening technique can be applied. The cross member is attached to the sides of the vertical members facing towards the centre of the vehicle, e.g. by welding. Other joining methods like bolting, bracing or adhesive bonding is possible for this joint, alternatively with the addition of flanges on the vertical members.

The vertical members can be manufactured as multi chamber extrusions. The cross member 4 is illustrated as a hollow section extrusion. Alternatively, the members of the portal frame could be made of sheet steel parts, or any appropriate material.

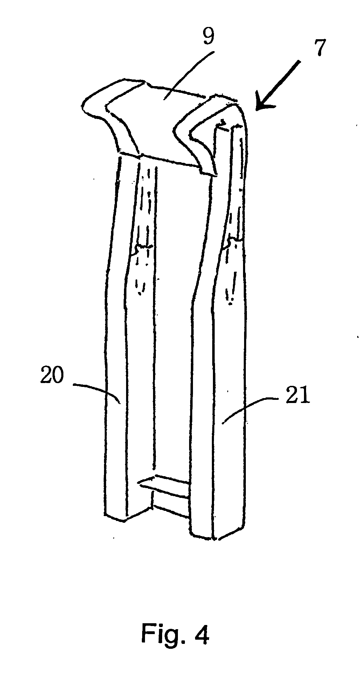

ROP units 7, 8 are embedded within the interior of each of these two vertical members 2, 3, in one chamber thereof. In the embodiment shown in the Figures 1 and 2, the bars 9, 10 extend somewhat above the members. (More details regarding the ROP unit will be explained with reference to Figs. 4 - 9.) In addition to the extensions 5, 6 from the top corners of the portal, the vertical members may have further attachment flanges. For instance at the back side of each vertical member, there can be arranged brackets 11, 12 for fixation to other parts of the car body (see Fig. 2). Further, flanges 13, 14 for the fixation of the vertical members to a bottom part (floor) of the car body are shown.

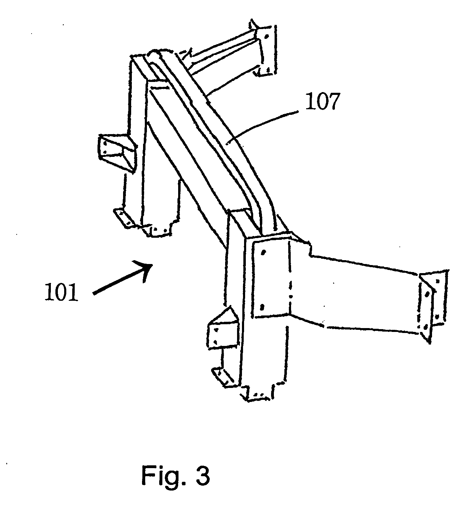

An alternative execution is shown in Fig. 3, where a portal frame 101 similar to that described above is combined with one single large roll over bar 107 as ROP unit. In this case, the area in-between the laterally spaced corner areas are in addition protected due to the connecting bar 107. In accordance to this design, there will normally not be employed two autonomous ROP units.

The ROPS in this embodiment employs in principle one single roll over bar 107 as shown in Fig. 4, which discloses a roll over bar for the embodiment shown in Figs. 1 and 2. In principle, the same bar can be applied in this second embodiment, the bar being enlarged in its transverse direction. This bar is an adaptation of the bar described in the Applicants not published patent application PCT/NO05/00270.

Compared to the solution mentioned above, the top section 9 of the bar 7 (see Fig. 4) may also be formed to comprise an extension in the vehicles length direction, providing an increased first area with which the roll over bar communicates with the ground in the large majority of impacts. In impact with soft ground, this increases energy absorption while reducing penetration, and risk for hooking into harder objects.

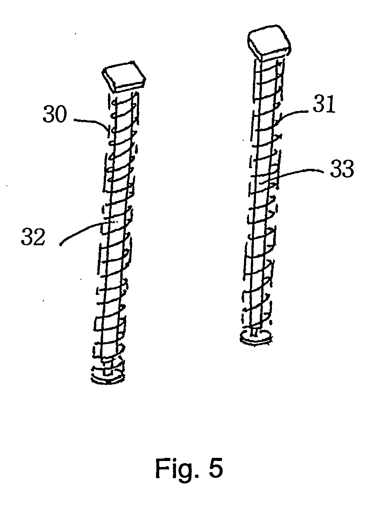

The roll over bar is ejected by compression springs 30, 31 with guiding elements 32, 33 as shown in Fig. 5, arranged inside each of the two hollow sections 20, 21 (Fig. 4) of the roll over bar 7.

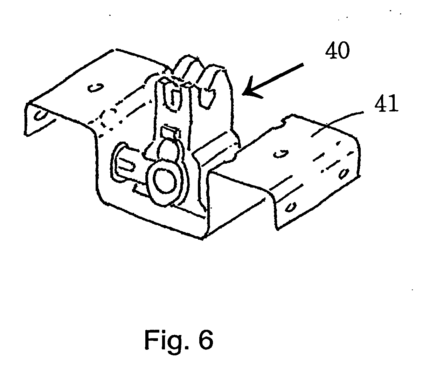

In normal operation of the vehicle, the roll over bar is held back in its compressed position by a hold/release mechanism 40, fitted to a bracket 41 that in turn is fastened to the lower end of the vertical members, as shown in Fig. 6.

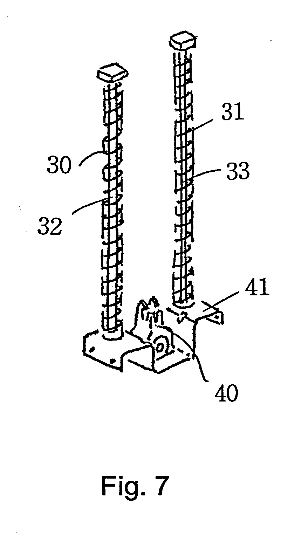

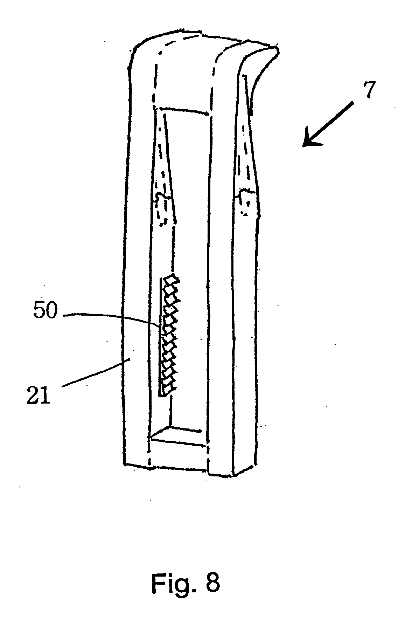

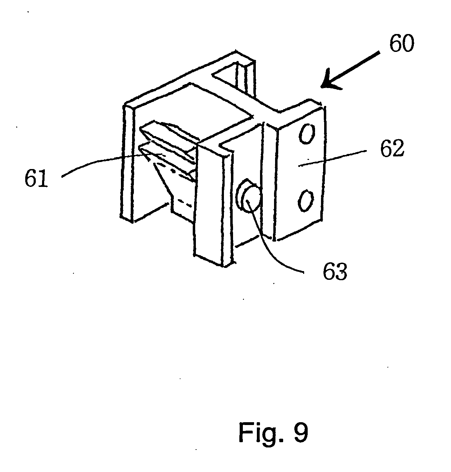

A sub-assembly of the components disclosed in Figs. 5 and 6 is shown in Fig. 7. In its deployed position, the roll over bar 7 is locked in the vertical direction of the vehicle by a rack 50 and ratchet mechanism 60, see Figs. 8 and 9. The rack 50 can be welded on to one of the hollow sections 21 of the roll over bar, as shown in Fig. 8. The ratchet 61 is mounted in a sub assembly comprising a bracket 62, spring (not shown) and bolt 63 for the ratchet, and the ratchet itself, as shown in Fig. 9. The ratchet sub assembly 60 can be bolted to the interior of the vertical members 2, 3 of the portal frame 1, so that it is fastened to two sides of the vertical member, filling most of the space between the hollow sections of the roll over bar.

It should be understood that similar arrangements can be made when employing just one wide roll over bar.

## Claims

1. Roll over protection system for a vehicle, comprising a structural frame (1) with at least one roll over protection unit, said structural frame being arranged in the interior of the vehicle and further extending in the transversal direction of the vehicle,
**characterised in that**
the frame comprises two substantial vertical extending members (2, 3) having at least one interface with the vehicle's structure, and further being interconnected with a transversally arranged beam (4).

2. A system in accordance with claim 1,
**characterised in that**
the vertical extending members (2, 3) comprise forward extensions (5, 6) connected to a B-frame or the similar in the vehicle.

3. A system in accordance with claim 1,
**characterised in that**
at least one vertical extending member (2, 3) is provided with an autonomious ROP unit with a deployable bar (7).

4. A system in accordance with claim 3,
**characterised in that**
the vertical extending members have one ROP unit each.

5. A system in accordance with claim 1, comprising one wide deployable roll over bar,
**characterised in that**
each of the vertical extending members supports one leg of the bar.

6. A system in accordance with claim 5, comprising one wide deployable roll over bar,
**characterised in that**
the transversal beam (4) has a channel-like aperture extending in its upper wall, for the embedment of the roll over bar in its stored position.

7. A system in accordance with claim 1,
**characterised in that**
the top section 9 of the bar 7 is formed to comprise an extension in the vehicle's length direction.

8. A system in accordance with claim 1,
**characterised in that**
the vertical extending members (2, 3) and/or the transversal beam (4) are/is made out of aluminium or an Al-alloy.
